# FASCICULE DE BREVET EUROPEEN

(11) **EP 2 373 531 B1**
(45) Date de publication et mention de la délivrance du brevet: **12.02.2014**
(21) Numéro de dépôt: 09801505.0
(22) Date de dépôt: 08.12.2009
(51) Int. Cl.: B61D 17/10, B62D 25/20, B64C 1/18

(54) **PLANCHER MODULAIRE POUR AÉRONEF**
MODULARER FUSSBODENABSCHNITT FÜR EIN LUFTFAHRZEUG
MODULAR FLOOR SECTION FOR AIRCRAFT

(30) Priorité: 09.12.2008 FR 0858408
(43) Date de publication de la demande: 12.10.2011
(73) Titulaire: Airbus Operations (Société par actions simplifiée), 31060 Toulouse (FR)
(72) Inventeur: LIEVEN, Patrick, F-31620 Fronton (FR); BELLET, Daniel, F-31470 Saint-Lys (FR)
(74) Mandataire: Gicquel, Olivier Yves Gérard
(86) Numéro de dépôt international: PCT/FR2009/052437
(87) Numéro de publication internationale: WO 2010/067001

(56) Documents cités:
- EP-A- 1 614 622
- WO-A-2005/095205
- US-A1- 2002 148 382

## Description

La présente invention relève du domaine des structures d'aéronefs. Elle concerne plus spécifiquement une structure de plancher et un procédé d'assemblage d'une structure de plancher dans un tronçon de fuselage d'aéronef.

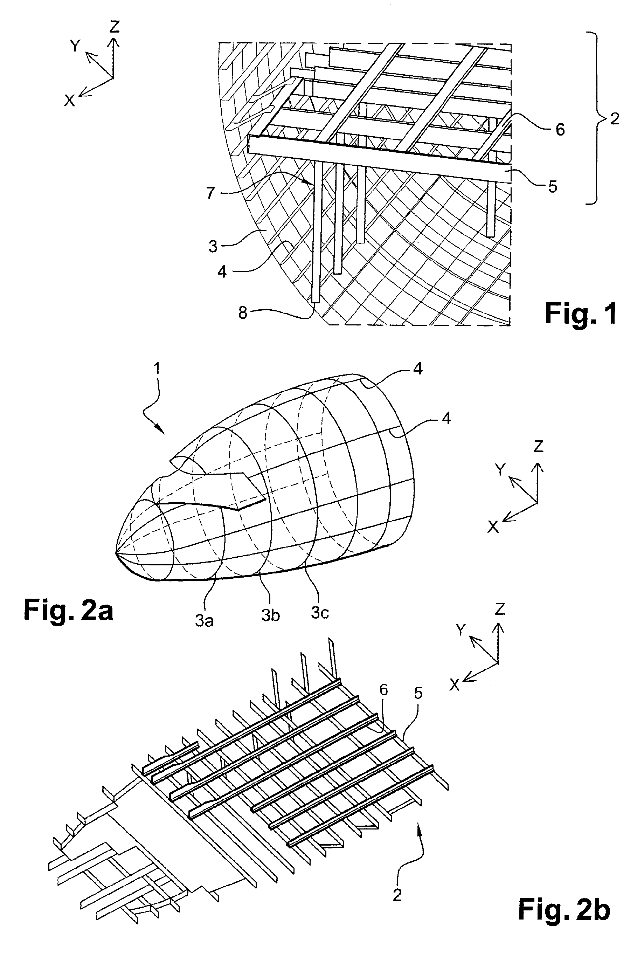

Un fuselage d'aéronef comporte de façon connue une structure de coque 1 (figure 2a) et un plancher 2 (figure 2b), et est réalisé communément par l'assemblage de deux ou plusieurs tronçons.

Chaque tronçon est généralement constitué, pour la structure de coque 1, de raidisseurs transversaux, dits cadres 3, de raidisseurs lonqitudinaux, dits lisses 4, fixés sur ces cadres 3, et d'une peau sous la forme d'une ou plusieurs feuilles métalliques ou composites mises en forme selon le profil désiré, fixée sur les cadres 3 et les lisses 4.

Les cadres 3 sont positionnés suivant des sections du fuselage sensiblement perpendiculaires à un axe longitudinal X de l'aéronef (figure 2a). Les lisses 4 s'étendent entre les cadres 3 sensiblement suivant l'axe lonaitudinal X.

Le plancher 2 est une structure primaire à l'intérieur de la structure de coque 1 du fuselage.

Actuellement et de façon connue, une section de plancher est constituée par un assemblage de traverses 5, de rails 6 (figure 2b) solidarisés par vissage, rivetage, soudure ou collage selon la nature des matériaux, et supportant des éléments de revêtement horizontal non illustrés.

Les traverses 5 sont généralement droites et horizontales, dans un repère aéronef, et s'étendent perpendiculairement à l'axe longitudinal X, suivant un axe transversal Y de l'aéronef. Elles ont pour rôle de drainer les efforts liés à la charge sur le plancher 2 vers la structure de coque 1 du fuselage. Les rails 6 s'étendent suivant l'axe longitudinal X. Ils servent à la fixation des éléments mobiliers, tels que par exemple des sièges.

Pour effectuer l'assemblage de la structure de coque 1 et du plancher 2, de nombreuses liaisons mécaniques doivent être assurées entre eux.

Ainsi par exemple, afin d'assurer une fonction de drainage des efforts (essentiellement le poids d'une charge sur le plancher) vers la structure de coque 1 du fuselage, les traverses 5 sont fixées aux cadres 3 en leurs extrémités et fréquemment par l'intermédiaire de contrefiches 7 prenant chacune appui en un autre point 8 du cadre.

Par ailleurs, chaque traverse 5 de plancher doit être mise en correspondance de façon précise avec un cadre 3 afin de lui être fixée.

Ce positionnement relatif du plancher 2 par rapport à la structure de coque 1 est, dans les modes de réalisation usuels, hyperstatique et nécessite une réalisation méthodique tant du plancher 2 que du fuselage lorsque le plancher est installé préassemblé dans chaque tronçon. Les traverses 5 et les cadres 3 sont des éléments de structure destinés à drainer des flux d'effort importants et présentent donc chacun une rigidité élevée. Par conséquent, ces éléments ne sont pas aptes à se déformer de manière à s'adapter à d'éventuels défauts d'alignement. Le rattrapage d'erreurs de positionnement lors de la fabrication est donc difficile.

Enfin, selon une évolution récente, l'utilisation de plus en plus répandue des matériaux composites pour la fabrication des structures du fuselage permet de réaliser une structure de coque 1 de fuselage d'un seul tenant, fermée circonférentiellement, dite fuselage composite full-barrel. Le plancher 2 et la structure de coque 1 ne peuvent alors plus être assemblés pour constituer un tronçon de fuselage par le procédé traditionnel d'assemblage du plancher sur une partie inférieure de la structure, dite barque, avant la complétion des cadres.

Par ailleurs, la mise en place d'un plancher préalablement assemblé dans la structure de coque fermée circonférentiellement accroît encore les difficultés liées aux tolérances de fabrication et à l'hyperstatisme de montage, puisque la structure de coque ainsi fermée est extrêmement rigide et qu'il est impossible de compenser les défauts d'alignement par la déformation élastique de la structure.

La demande de brevet US publiée sous la référence US 2002/0148382 décrit un plancher formé de panneaux pultrudés juxtaposés longitudinalement lesdits panneaux étant constitué de parois définissant une cavité à l'intérieur de laquelle sont placées de manières régulières des nervures disposées parallèlement aux faces de contact des panneaux; la cavité pouvant être par ailleurs remplie de mousse formant un isolant thermique. De tels panneaux par ailleurs parfaitement adaptés à la réalisation d'un plancher pour un véhicule terrestre sont néanmoins mal adaptés à la réalisation d'un plancher d'aéronef, du fait notamment de leur structure compacte.

La demande internationale publiée sous la référence WO2005/095205 décrit quant à elle une structure de plancher permettant de modifier de manière simple la répartition spatiale des différentes charges utiles (sièges, commodités, etc...) pouvant être disposées sur le plancher de la cabine d'un aéronef. Cette structure de plancher étant basée sur l'association de rails supports parallèles montés de manière fixe et des éléments de plancher interchangeables formant des plaques ayant soit une épaisseur standard soit, aux endroits où cela est nécessaire une épaisseur plus importante. Une telle structure, consistant à poser un plancher sous forme de panneaux sur des éléments porteurs préalablement assemblée à la structure de l'aéronef, ne constitue pas une solution aux problèmes de difficulté de montage évoqués précédemment.

Il existe donc un besoin pour une structure de plancher apte à permettre l'assemblage économique dudit plancher dans une structure de coque fermée circonférentiellement, et permettant de compenser les légers défauts d'alignement entre les traverses de plancher et les cadres.

Le but de l'invention est de proposer une nouvelle structure de plancher de cabine d'aéronef associée à un nouveau procédé d'assemblage d'un tel plancher.

A cet effet l'invention vise en premier lieu un plancher pour cabine de véhicule, ledit véhicule étant du type dont la structure de coque comprend des cadres, disposés perpendiculairement à l'axe longitudinal X de déplacement du véhicule,

le plancher étant constitué d'une juxtaposition d'éléments de section droite identique selon un plan dit vertical longitudinal XZ, mais de longueur éventuellement différente, et comprenant chacun :
une traverse principalement plane allongée, disposée dans un plan dit vertical transversal YZ, ladite traverse étant adaptée à venir se fixer en ses deux extrémités sur une structure de support solidarisée à des cadres du véhicule, les traverses des divers éléments juxtaposés étant situées au même niveau selon l'axe vertical Z,
une plaque globalement plane allongée, disposée dans un plan dit horizontal XY, comportant le long d'un de ses bords longitudinaux (axe Y) une zone de chevauchement, et le long de l'autre bord longitudinal une zone d'appui, les zones de chevauchement et d'appui étant de largeurs similaires et d'épaisseur totale inférieure ou égale à l'épaisseur moyenne de la plaque, ladite plaque étant perpendiculaire à la traverse, solidarisée sur une face dite inférieure, sensiblement au droit du milieu de la zone d'appui, en au moins deux points, à ladite traverse.

On comprend que le plancher est formé d'éléments comportant chacun une partie plane, ces parties planes étant disposées dans le prolongement les unes des autres. Une zone de recouvrement de ces parties planes permet de les fixer ensemble, et de répartir les efforts appliqués sur chaque plaque sur sa traverse et la traverse voisine.

Préférentiellement, le plancher est adapté à un véhicule du type dont les cadres sont répartis à intervalles réguliers sur au moins une partie de la longueur du véhicule selon l'axe longitudinal X, et en ce que, pour au moins une partie des éléments profilés, chaque traverse d'un élément profilé vient se fixer directement sur un cadre de la structure de coque.

On comprend que la structure de support à laquelle vient se fixer la traverse de l'élément profilé est un cadre de la structure de la coque si ces cadres sont disposés à intervalles réguliers, ou une structure intermédiaire solidarisée elle-même à la structure de la coque si tel n'est pas le cas.

Dans un mode préféré de mise en oeuvre, les éléments sont solidarisés aux éléments voisins au niveau de leurs zones de chevauchement et d'appui, une fois assemblés.

Dans un mode de réalisation préféré, chaque traverse comporte un raidisseur disposé le long du bord de ladite traverse opposé à la plaque plane.

Dans un mode de réalisation préféré, les éléments sont réalisés en métal ou alliage métallique léger, chaque plaque plane comportant sur sa face inférieure au moins un raidisseur intermédiaire longitudinal.

Selon un autre mode de réalisation, les éléments sont réalisés en matériaux composites, chaque plaque plane comportant une âme en nid d'abeille.

L'invention vise sous un second aspect un élément de plancher, adapté à former par juxtaposition un plancher pour cabine de véhicule tel qu'exposé.

L'invention vise sous encore un autre aspect un aéronef. du tvoe dont la structure du fuselage est formée, d'une part, de cadres globalement circulaires, disposés perpendiculairement à l'axe longitudinal X de déplacement de l'avion, lesdits cadres étant répartis à distances régulières le long de cet axe longitudinal X, d'autre part, de raidisseurs longitudinaux reliant ces cadres,
comportant un plancher tel qu'exposé ci-dessus.

Selon un mode préféré de réalisation de l'aéronef, les traverses du plancher sont disposées dans un plan vertical YZ perpendiculairement à l'axe longitudinal X de l'aéronef, chaque traverse étant fixée en ses deux extrémités sur un même cadre de la structure du fuselage de l'aéronef, en deux points symétriques par rapport à un plan de symétrie vertical de l'aéronef, et en ce que chaque élément présente une longueur calculée en fonction de sa disposition entre les cadres de la cabine de l'aéronef.

L'invention est également relative à un procédé d'assemblage d'un plancher sur une structure de coque d'un tronçon de coque de véhicule qui comporte les étapes de :
- réalisation de la structure de coque comportant les cadres,
- découpage des éléments profilés à des longueurs prédéterminées et finition de leurs extrémités,
- présentation d'un premier élément profilé au droit du cadre sur lequel il doit venir se fixer,
- fixation de la traverse de cet élément profilé au cadre correspondant,
- ajout, un par un, d'éléments profilés à côté du plancher déjà assemblé, et fixation des traverses de ces divers éléments profilés juxtaposés. aux cadres correspondants à un même niveau selon l'axe vertical Z, chaque zone de chevauchement d'une plaque venant se placer au dessus d'une zone d'appui de la plaque suivante,
- solidarisation de deux éléments successifs au niveau des zones de chevauchement et d'appui desdits éléments,
- présentation d'une traverse de profil classique en "I", de dimensions similaires aux traverses des éléments profilés sous la zone de chevauchement du dernier élément profilé assemblé, solidarisation à celui-ci, et fixation sur le cadre se trouvant à la même position selon l'axe longitudinal X de l'avion.

Les buts et avantages de l'invention seront mieux compris à la lecture de la description et des dessins d'un mode particulier de réalisation, donné à titre d'exemple non limitatif et pour lesquels les dessins représentent :
Figure 1 : un exemple d'un fuselage d'aéronef dont un plancher et une structure de coque sont assemblées suivant un procédé de l'art antérieur,
Figure 2a : un exemple d'une structure de coque avant d'un aéronef,
Figure 2b : un exemple d'un plancher avant d'un aéronef selon l'art antérieur,
Figure 3 : vue en coupe des éléments assemblés de plancher modulaire selon l'invention, dans un mode de réalisation en alliage métallique,
Figure 4 : un élément de plancher modulaire, dans un mode de réalisation en matériau composite,
Figure 5 : vue de détail de la zone d'assemblage de deux éléments de plancher, dans un mode de réalisation en matériau composite.

L'invention trouve sa place dans la partie avant d'un fuselage d'avion.

On définit pour la suite de la description un axe longitudinal X orienté dans le sens de déplacement de l'avion en vol horizontal, un axe transversal Y situé dans le plan horizontal et perpendiculaire à l'axe longitudinal X, et un axe vertical Z. On utilisera les termes de antérieur, postérieur, avant, arrière, dessus, dessous, gauche, droit, par référence à ces axes. L'avion considéré ici est de type à symétrie par rapport à un plan vertical longitudinal XZ.

Comme décrit précédemment et illustré par la figure 2a, le fuselage dudit aéronef comporte une structure de coque 1 comprenant des cadres 3 orientés sensiblement perpendiculairement à l'axe longitudinal X, et des raidisseurs longitudinaux 4 reliant les cadres 3 entre eux et orientées sensiblement parallèlement à cet axe longitudinal X. Dans le présent exemple, on suppose les cadres 3 espacés régulièrement d'une distance d sur au moins une partie de la longueur du fuselage.

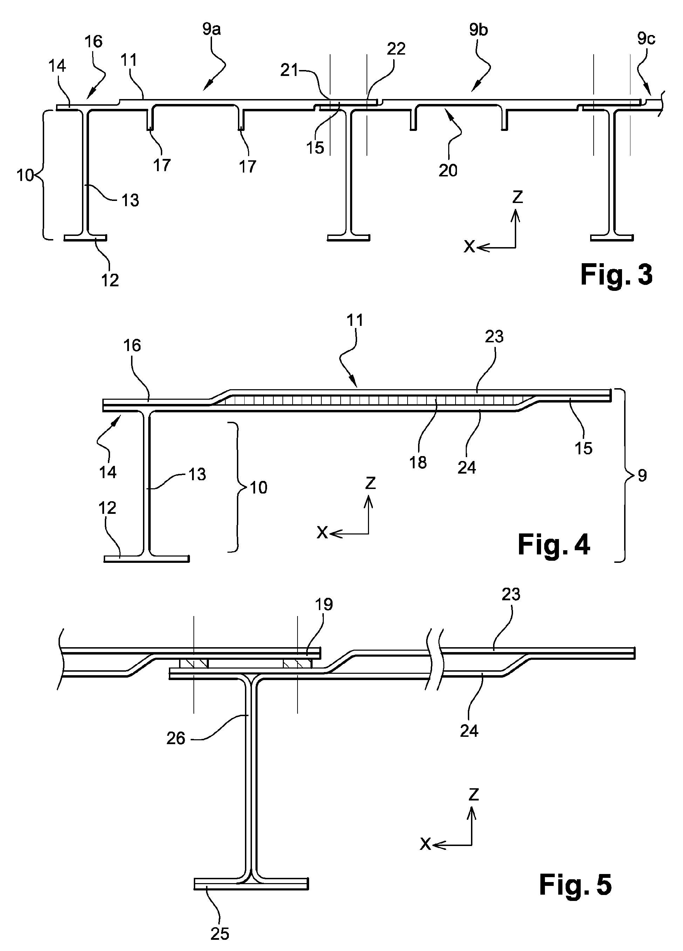

Le plancher 2 selon l'invention, tel qu'illustré en coupe en figure 3, est réalisé par assemblage juxtaposé d'au moins deux éléments profilés 9a, 9b,... allongés, disposés côté à côte perpendiculairement à l'axe longitudinal X de l'aéronef.

Ces éléments profilés 9a, 9b, 9c... sont de section identique.

Chacun de ces éléments profilés 9 comprend une traverse 10 présentant un profil classique en "I", comportant un raidisseur inférieur 12, dit semelle, formant raidisseur, une âme 13, plane, disposée dans un plan vertical transversal YZ, ladite traverse 10 étant adaptée à venir se fixer en ses deux extrémités sur un cadre 3 de la structure du fuselage de l'aéronef.

La traverse 10 de chaque élément profilé 9 comprend également un raidisseur supérieur 14, dit tête, qui, dans la présent invention, forme une partie intégrante d'une plaque 11 globalement plane allongée, disposée dans un plan horizontal XY, à la surface inférieure de laquelle la traverse 10 se trouve donc solidarisée.

La largeur de la plaque 11, et donc de chaque élément profilé 9 est dans le présent exemple non limitatif proche de la distance d entre deux cadres 3 de la structure de coque 1, par exemple quelques dizaines de centimètres, de manière à permettre la fixation pour chaque élément profilé 9a, 9b, 9c... des deux extrémités de sa traverse 10a, 10b, 10c à deux points d'un cadre 3a, 3b, 3c correspondant, ces points étant sensiblement symétriques selon le plan de symétrie vertical XZ de l'aéronef.

Les éléments profilés 9a, 9b, 9c... sont de longueurs éventuellement différentes, la longueur de chaque élément profilé 9a, 9b, 9c... dépendant de la largeur du cadre 3a, 3b, 3c... correspondant, et donc de la largeur de la structure de coque 1 à la position où ledit élément profilé doit être installé. On comprend que la longueur réelle de chaque élément profilé 9 va être légèrement inférieure dans la pratique à cette largeur du cadre 3 correspondant, de manière à permettre sa fixation sur ledit cadre 3. Le mode de fixation des éléments sur les cadres correspondants, sort du cadre de la présente invention et n'est donc pas détaillé plus avant ici.

De la même manière, la géométrie exacte des extrémités de chaque élément profilé 9 dépend du son mode de fixation sur chaque cadre 3, et n'est donc pas détaillée ici.

La plaque 11 comporte le long d'un de ses bords longitudinaux (s'étendant selon l'axe Y) une zone de chevauchement 15, et le long de l'autre bord longitudinal une zone d'appui 16, les zones de chevauchement 15 et d'appui 16 étant de largeurs similaires et d'épaisseur totale inférieure ou égale à l'épaisseur moyenne de la plaque 11.

La zone de chevauchement 15 est dans le présent exemple une partie de la plaque plane 11, amincie sur sa face inférieure, mais dont la face supérieure est coplanaire avec le reste de la face supérieure de la plaque plane 11. De même, la zone d'appui 16 est dans le présent exemple une partie de la plaque plane 11, amincie sur sa face supérieure, mais dont la face inférieure est coplanaire avec le reste de la face inférieure de la plaque plane 11. Ces deux zones de chevauchement et d'appui comportent des perçages 21, 22 respectivement, se correspondant lorsque la zone de chevauchement 15 d'un élément profilé 9 vient se superposer à la zone d'appui 16 d'un élément profilé 9 voisin.

La plaque 11 et la traverse 10, sont solidarisées sensiblement au droit du milieu de la zone d'appui 16, laquelle se confond pratiquement dans le présent exemple avec la tête 14 de la traverse 10.

Pour augmenter sa rigidité lorsqu'elle est soumise à une charge sur sa face supérieure, la plaque plane 11 comporte sur sa face inférieure deux raidisseurs intermédiaires 17 rectilignes, verticaux et orientés selon le plan vertical transversal YZ, la zone 20 de la plaque plane 11 située entre ces raidisseurs 17 étant dans le présent exemple plus mince. Les raidisseurs intermédiaires 17 divisent sensiblement en trois parties égales la largeur de la plaque plane 11.

Les éléments profilés 9 sont dans le présent exemple réalisés en alliage léger ou en aluminium, par des techniques connues de l'homme de l'art.

Ils sont produits en une seul poutre d'une grande longueur, puis découpés en éléments profilés 9 plus courts selon les longueurs requises par l'assemblage d'un plancher donné.

Les dimensions et épaisseurs des différentes parties de chaque élément profilé 9 sont calculées de façon connue de l'homme de l'art en fonction des charges mécaniques à reprendre et des dimensions de la structure 1 de la coque de l'aéronef sur lequel le plancher 2 doit être installé.

Le montage d'un plancher 2 selon l'invention comporte plusieurs étapes. Il est effectué après la mise en place de la structure de coque 1 comportant les cadres 3, les lisses 4 et la peau extérieure, cette mise en place étant effectuée de façon connue d'e l'homme de l'art.

Le procédé de montage comprend ensuite la présentation d'un premier élément profilé 9a au droit du cadre 3a sur lequel il doit venir se fixer. La traverse 10a de cet élément profilé 9a est alors fixée par des moyens connus au cadre 3a.

Ensuite, un par un, des éléments profilés 9ᵢ, découpés préalablement à une longueur adaptée à leur position dans la cabine, et dont les extrémités ont été façonnées en vue de leur fixation, sont placés à côté du plancher 2 déjà assemblé, et les traverses 10ᵢ de ces divers éléments profilés 9ᵢ juxtaposés, sont fixées aux cadres 3ᵢ correspondants à un même niveau selon l'axe vertical Z, les plaques planes 11ᵢ de ces éléments profilés 9ᵢ étant alors situées dans un même plan horizontal XY, et se prolongeant pour former un plancher horizontal, chaque zone de chevauchement 15ᵢ d'une plaque venant se placer au dessus d'une zone d'appui 16ᵢ₋₁ de la plaque suivante.

Lors de la mise en place de ces éléments, ceux-ci sont solidarisés, par exemple par rivetage ou assemblage boulonné utilisant les perçages 21, 22 superposés des zones de chevauchement 15 et d'appui 16 des éléments successifs.

Des rondelles isolantes 19 sont éventuellement disposées dans l'intervalle entre la zone de chevauchement 15 d'une plaque et la zone d'appui 16 de la suivante, lors de leur assemblage, pour réduire les vibrations ou autoriser une certaine flexibilité de l'assemblage.

Lorsque le plancher 2 assemblé atteint la longueur souhaitée, une traverse de profil classique en "I", de dimensions similaires aux traverses 10 des éléments profilés 9, est présentée sous la zone de chevauchement 15 du dernier élément profilé assemblé, solidarisée à celui-ci, et fixée sur le cadre 3 se trouvant à la même position selon l'axe longitudinal X de l'avion.

Des contrefiches verticales 7 sont éventuellement fixées à certaines traverses 10 et aux cadres 3 correspondant, selon les charges maximales à supporter sur le plancher 2, le choix de l'installation de ces contrefiches et leur position étant déterminés par des moyens connus.

Le plancher selon l'invention tel que décrit est particulièrement adapté au cas de cockpit d'aéronef, lequel ne comporte pas de rail de plancher pour la fixation des sièges passagers, au contraire de la cabine passager.

Parmi les avantages du plancher d'aéronef selon l'invention, on comprend que l'on supprime ici le besoin de montage compliqué et complet du plancher avant son intégration dans une section de coque déjà assemblée, tout en autorisant de façon simple la mise en place d'un plancher dans une structure de coque fermée circonférentiellement.

Par ailleurs, le plancher et le procédé d'installation selon l'invention permettent le rattrapage d'un jeu entre les cadres de façon aisée.

Enfin, la production du profilé en grande longueur, ensuite découpée à volonté produit des économies de réalisation significatives.

La portée de la présente invention ne se limite pas aux détails des formes de réalisation ci-dessus considérées à titre d'exemple, mais s'étend au contraire aux modifications à la portée de l'homme de l'art.

Dans une variante, les éléments profilés ne comportent pas de perçages 21, 22, et ceux-ci sont réalisés lors de la juxtaposition de deux éléments profilés 9, au moment de leur solidarisation. Cette disposition autorise un montage des éléments avec un léger décalage des zones de chevauchement et d'appui, permettant donc de rattraper des erreurs de géométrie de la structure ou du plancher.

Une variante proche est caractérisée par le fait que seules les zones de chevauchement 15 comportent des perçages 21, et que les perçages 22 correspondants dans les zone d'appui sont réalisés lors de l'assemblage des éléments profilés 9.

Dans une autre variante, des intervalles différents existent entre les cadres 3 de l'aéronef, et un plancher 2 est réalisé par juxtaposition d'éléments profilés 9 similaires mais de largeurs adaptées à ces intervalles différents, tout en conservant des zones de chevauchement et d'appui identiques, de manière à pouvoir être assemblés facilement.

Dans ce cas, au lieu d'une seule source de profilés de largeur d, le procédé d'assemblage en utilise plusieurs, de largeurs standardisées selon les intervalles entre cadres les plus fréquentes.

Toujours dans le cas où existent des intervalles non réguliers entre les cadres 3 de la structure de coque 1, une variante de mise en place consiste à utiliser une structure de support intermédiaire (non illustrée sur les figures), par exemple réalisée sous forme de poutre allongée, comprenant sur un de ses côtés des moyens de fixation des traverses 10 des éléments profilés 9, et de l'autre côté des moyens de fixation sur les cadres 3 de la structure de coque 1 de l'aéronef.

Dans une variante de réalisation, la plaque plane 11 et la traverse 10 ne sont solidarisées qu'en quelques points le long du bord supérieur de ladite traverse 10.

Dans une variante de réalisation des éléments profilés 9, illustrée par la figure 4, ceux-ci sont fabriqués en matériaux composites au lieu d'alliage léger ou d'aluminium.

Dans cette variante, la plaque plane 11 est par exemple constituée d'une âme 18 en nid d'abeille de type classique, prise entre deux flans 23, 24 composés de nappes de fibres bidimensionnelles maintenues par une résine. La traverse est alors également réalisée par assemblage de flans 24, 25, 26. Le mode de fabrication de tels éléments composites est connu et sort du cadre de la présente invention.

Ces éléments profilés 9 en matériaux composites sont alors découpés selon la longueur voulue et assemblée de façon sensiblement analogue à ce qui a été décrit.

## Revendications

1. Plancher (2) pour cabine de véhicule, ledit véhicule étant du type dont la structure de coque (1) comprend des cadres (3), disposés perpendiculairement à l'axe longitudinal X de déplacement du véhicule, ledit plancher étant constitué d'une juxtaposition d'éléments profilés (9) de section droite identique selon un plan dit vertical longitudinal XZ, mais de longueur éventuellement différente, chaque élément profilé (9) comprenant:
une traverse (10) principalement plane allongée, disposée dans un plan dit vertical transversal YZ, ladite traverse (10) étant adaptée à venir se fixer en ses deux extrémités sur une structure de support solidarisée à des cadres (3) du véhicule, les traverses (10) des divers éléments (9) juxtaposés étant situées au même niveau selon l'axe vertical Z,
une plaque (11) globalement plane allongée, disposée dans un plan dit horizontal XY, comportant le long d'un de ses bords longitudinaux une zone de chevauchement (15), et le long de l'autre bord longitudinal une zone d'appui (16), les zones de chevauchement (15) et d'appui (16) étant de largeurs similaires et d'épaisseur totale inférieure ou égale à l'épaisseur moyenne de la plaque (9), **caractérisé en ce que**, la plaque (11) d'un élément de plancher (9) étant perpendiculaire à la traverse (10), elle est solidarisée sur une face dite inférieure, sensiblement au droit du milieu de la zone d'appui (16), en au moins deux points, à ladite traverse (10).

2. Plancher (2) selon la revendication 1, **caractérisé en ce qu'**il est adapté à un véhicule du type dont les cadres (3) sont répartis à intervalles réguliers sur au moins une partie de la longueur du véhicule selon l'axe longitudinal X, et **en ce que** pour au moins une partie des éléments profilés (9), chaque traverse (10) d'un élément profilé (9) vient se fixer directement sur un cadre (3) de la structure de coque (1).

3. Plancher (2) selon l'une quelconque des revendications précédentes, **caractérisé en ce que** les éléments profilés (9) sont solidarisés aux éléments profilés voisins au niveau de leurs zones de chevauchement (15) et d'appui (16). une fois assemblés.

4. Plancher (2) selon l'une quelconque des revendications précédentes, **caractérisé en ce que** la traverse (10) de chaque élément profilé (9) comporte un raidisseur (12) disposé le long du bord de ladite traverse (10) opposé à la plaque plane (11).

5. Plancher (2) selon l'une quelconque des revendications 1 à 3, **caractérisé en ce que** les éléments profilés (9) sont réalisés en métal ou alliage métallique léger, chaque plaque plane (11) comportant sur sa face inférieure au moins un raidisseur intermédiaire (17) longitudinal.

6. Plancher (2) selon l'une quelconque des revendications 1 à 3, **caractérisé en ce que** les éléments profilés (9) sont réalisés en matériaux composites, chaque plaque plane (11) comportant une âme (18) en nid d'abeille.

7. Aéronef, du type dont la structure du fuselage (1) est formée, d'une part, de cadres (3) globalement circulaires, disposés perpendiculairement à l'axe longitudinal X de déplacement de l'avion, lesdits cadres (3) étant répartis à intervalles réguliers le long de cet axe longitudinal X, d'autre part, de raidisseurs longitudinaux (4) reliant ces cadres,
**caractérisé en ce qu'**il comporte un plancher (2) de cabine selon l'une quelconque des revendications 1 à 6.

8. Aéronef selon la revendication 7, **caractérisé en ce que** les traverses (10) des éléments profilés (9) du plancher (2) sont disposées dans un plan vertical YZ, perpendiculairement à l'axe longitudinal X de l'aéronef, chaque traverse (10) étant fixée en ses deux extrémités sur un même cadre (3) de la structure du fuselage (1) de l'aéronef, en deux points symétriques par rapport à un plan de symétrie vertical de l'aéronef, et **en ce que** chaque élément profilé (9) présente une longueur calculée en fonction de sa disposition entre les cadres (3) de la cabine de l'aéronef.

9. Procédé d'assemblage d'un plancher (2) sur une structure de coque (1) d'un tronçon de coque de véhicule qui comporte les étapes de :
- réalisation de la structure de coque (1) comportant les cadres (3),
- découpage des éléments profilés (9) à des longueurs prédéterminées et finition de leurs extrémités,
- présentation d'un premier élément profilé (9a) au droit du cadre (3a) sur lequel il doit venir se fixer,
- fixation de la traverse (10a) de cet élément profilé (9a) au cadre correspondant (3a),
- ajout, un par un, d'éléments profilés (9ᵢ) à côté du plancher (2) déjà assemblé, et fixation des traverses (10ᵢ) de ces divers éléments profilés (9ᵢ) juxtaposés, aux cadres (3ᵢ) correspondants à un même niveau selon l'axe vertical Z, chaque zone de chevauchement (15ᵢ) d'une plaque venant se placer au dessus d'une zone d'appui (16ᵢ₋₁) de la plaque suivante,
- solidarisation de deux éléments successifs au niveau des zones de chevauchement (15) et d'appui (16) desdits éléments,
- présentation d'une traverse de profil classique en "I", de dimensions similaires aux traverses (10) des éléments profilés (9), sous la zone de chevauchement (15) du dernier élément profilé assemblé, solidarisation à celui-ci, et fixation sur le cadre (3) se trouvant à la même position selon l'axe longitudinal X de l'avion.

## Patentansprüche

1. Fußboden (2) für Fahrzeuginnenraum, wobei das Fahrzeug des Typs ist, dessen Rumpfstruktur (1) Rahmen (3) aufweist, die senkrecht zu der Längsachse X der Bewegung des Fahrzeugs angeordnet sind, wobei der Fußboden aus einem Nebeneinanderfügen von Profilelementen (9) mit identischem geradem Querschnitt gemäß einer Ebene, die vertikale Längsebene XZ genannt wird, besteht, aber eventuell mit unterschiedlicher Länge, wobei jedes Profilelement (9) Folgendes aufweist:
eine im Wesentlichen ebene längliche Querleiste (10), die in einer Ebene angeordnet ist, die vertikale Querebene YZ genannt wird, wobei die Querleiste (10) angepasst ist, um sich an ihren zwei Enden auf einer Tragstruktur zu fixieren, die fest mit Rahmen (3) des Fahrzeugs verbunden ist, wobei die Querleisten (10) der verschiedenen nebeneinander liegenden Elemente (9) auf demselben Niveau entlang der vertikalen Achse Z liegen,
eine insgesamt ebene längliche Platte (11), die in einer Ebene angeordnet ist, die horizontale Ebene XY genannt wird, die entlang eines ihrer Längsränder einen Überlappungsbereich (15) und entlang des anderen Längsrands eine Auflagezone (16) aufweist, wobei der Überlappungsbereich (15) und die Auflagezone (16) ähnliche Breiten und eine Gesamtstärke kleiner oder gleich der mittleren Stärke der Platte (9) haben, **dadurch gekennzeichnet, dass**, da die Platte (11) eines Fußbodenelements (9) zu der Querleiste (10) senkrecht ist, sie mit einer Seite, die Unterseite genannt wird, im Wesentlichen im rechten Winkel zu der Mitte der Auflagezone (16) an mindestens zwei Stellen an der Querleiste (10) fest verbunden ist.

2. Fußboden (2) nach Anspruch 1, **dadurch gekennzeichnet, dass** er an ein Fahrzeug des Typs angepasst ist, dessen Rahmen (3) in regelmäßigen Abständen auf mindestens einem Teil der Länge des Fahrzeugs entlang der Längsachse X verteilt sind, u n d d a s s bei mindestens einem Teil der Profilelemente (9) jede Querleiste (10) eines Profilelements (9) direkt auf einem Rahmen (3) der Rumpfstruktur (1) befestigt wird.

3. Fußboden (2) nach einem der vorhergehenden Ansprüche, **dadurch gekennzeichnet, dass** die Profilelemente (9) mit den benachbarten Profilelementen auf dem Niveau ihrer Überlappungsbereiche (15) und Auflagezonen (16), nachdem sie zusammengefügt wurden, fest verbunden sind.

4. Fußboden (2) nach einem der vorhergehenden Ansprüche, **dadurch gekennzeichnet, dass** die Querleiste (10) jedes Profilelements (9) eine Versteifung (12) aufweist, die entlang des Rands der Querleiste (10), der der ebenen Platte (11) gegenüberliegt, angeordnet ist.

5. Fußboden (2) nach einem der Ansprüche 1 bis 3, **dadurch gekennzeichnet, dass** die Profilelemente (9) aus Metall oder Leichtmetalllegierung hergestellt sind, wobei jede ebene Platte (11) auf ihrer Unters eite mindestens eine Längszwischenversteifung (17) aufweist.

6. Fußboden (2) nach einem der Ansprüche 1 bis 3, **dadurch gekennzeichnet, dass** die Profilelemente (9) aus Verbundwerkstoffen hergestellt sind, wobei jede ebene Platte (11) eine Wabenseele (18) aufweist.

7. Luftfahrzeug des Typs, dessen Rumpfstruktur (1) einerseits aus allgemein kreisförmigen Rahmen (3) gebildet ist, die senkrecht zu der Längsachse X der Bewegung des Flugzeugs angeordnet sind, wobei die Rahmen (3) in regelmäßigen Abständen entlang dieser Längsachse X verteilt sind, andererseits aus Längsversteifungen (4), die diese Rahmen verbinden,
**dadurch gekennzeichnet, dass** es einen Kabinenfußboden (2) nach einem der Ansprüche 1 bis 6 aufweist.

8. Luftfahrzeug nach Anspruch 7, **dadurch gekennzeichnet, dass** die Querleisten (10) der Profilelemente (9) des Fußbodens (2) in einer vertikalen Ebene YZ senkrecht zu der Längsachse X des Luftfahrzeugs angeordnet sind, wobei jede Querleiste (10) an ihren zwei Enden auf einem selben Rahmen (3) der Rumpfstruktur (1) des Luftfahrzeugs an zwei in Bezug zu einer vertikalen Symmetrieebene des Luftfahrzeugs symmetrischen Punkten befestigt ist, und dass jedes Profilelement (9) eine Länge aufweist, die in Abhängigkeit von seiner Anordnung zwischen den Rahmen (3) der Luftfahrzeugkabine berechnet ist.

9. Verfahren zum Zusammenfügen eines Fußbodens (2) auf einer Rumpfstruktur (1) eines Rumpfabschnitts eines Fahrzeugs, das die folgenden Schritte aufweist:
- Herstellen der Rumpfstruktur (1), die die Rahmen (3) aufweist,
- Zuschneiden der Profilelemente (9) auf vorbestimmte Längen und Endfertigung ihrer Enden,
- Präsentation eines ersten Profilelements (9a) im rechten Winkel zu dem Rahmen (3a), auf welchem es befestigt werden soll,
- Befestigen der Querleiste (10a) dieses Profilelements (9a) an dem entsprechenden Rahmen (3a),
- einzelnes Hinzufügen von Profilelementen (9ᵢ) neben dem Fußboden (2), der bereits zusammengefügt ist, und Befestigen der Querleisten (10ᵢ) die s er verschiedenen nebeneinanderliegenden Profilelemente (9ᵢ) an den entsprechenden Rahmen (3ᵢ) auf einem selben Niveau entlang der vertikalen Achse Z, wobei sich jeder Überlappungsbereich (15ᵢ) einer Platte oberhalb einer Auflagezone (16ᵢ₋₁) jeder darauf folgenden Platte platziert,
- festes Verbinden zweier aufeinander folgender Elemente auf dem Niveau der Überlappungsbereiche (15) und Auflagezonen (16) der Elemente,
- Präsentation einer Querleiste mit herkömmlichem "I"-Profil mit ähnlichen Maßen wie die Querleisten (10) der Profilelemente (9) unter dem Überlappungsbereich (15) des letzten zusammengebauten Profilelements, festes Verbinden mit dieser und Befestigen auf dem Rahmen (3), der sich in derselben Position entlang der Längsachse X des Luftfahrzeugs befindet.

## Claims

1. Floor (2) for vehicle cabin, said vehicle being of the type whose shell structure (1) comprises frames (3), arranged perpendicularly to the longitudinal axis X of displacement of the vehicle, said floor consisting of a juxtaposition of profile elements (9) of identical cross section on a so-called vertical longitudinal plane XZ, but of possibly different length, each profile element (9) comprising:
a mainly planar elongate crossmember (10), arranged in a so-called vertical transversal plane YZ, said crossmember (10) being designed to be fastened at both its ends onto a support structure securely attached to frames (3) of the vehicle, the crossmembers (10) of the various juxtaposed elements (9) being located at the same level on the vertical axis Z,
an overall planar elongate plate (11), arranged in a so-called horizontal plane XY, comprising, along one of its longitudinal edges, an area of overlap (15), and along the other longitudinal edge, a support area (16), the areas of overlap (15) and of support (16) being of similar widths and of total thickness less than or equal to the average thickness of the plate (9), **characterized in that**, the plate (11) of a floor element (9) being perpendicular to the crossmember (10), it is securely attached to a so-called bottom face, substantially at a right angle to the middle of the support area (16), at at least two points, to said crossmember (10).

2. Floor (2) according to Claim 1, **characterized in that** it is designed for a vehicle of the type for which the frames (3) are distributed at regular intervals over at least a part of the length of the vehicle along the longitudinal axis X, and **in that**, for at least some of the profile elements (9), each crossmember (10) of a profile element (9) is fixed directly onto a frame (3) of the shell structure (1).

3. Floor (2) according to either one of the preceding claims, **characterized in that** the profile elements (9) are securely attached to the neighbouring profile elements in their areas of overlap (15) and of support (16), once assembled.

4. Floor (2) according to any one of the preceding claims, **characterized in that** the crossmember (10) of each profile element (9) comprises a stiffener (12) arranged along the edge of said crossmember (10) opposite to the planar plate (11).

5. Floor (2) according to any one of Claims 1 to 3, **characterized in that** the profile elements (9) are made of metal or light metal alloy, each planar plate (11) comprising, on its bottom face, at least one longitudinal intermediate stiffener (17).

6. Floor (2) according to any one of Claims 1 to 3, **characterized in that** the profile elements (9) are made of composite materials, each planar plate (11) including a honeycomb core (18).

7. Aircraft, of the type of which the structure of the fuselage (1) is formed, on the one hand, from overall circular frames (3), arranged perpendicularly to the longitudinal axis X of displacement of the aeroplane, said frames (3) being distributed at regular intervals along this longitudinal axis X, and on the other hand, from longitudinal stiffeners (4) linking these frames, **characterized in that** it comprises a cabin floor (2) according to any one of Claims 1 to 6.

8. Aircraft according to Claim 7, **characterized in that** the crossmembers (10) of the profile elements (9) of the floor (2) are arranged in a vertical plane YZ, perpendicularly to the longitudinal axis X of the aircraft, each crossmember (10) being fixed at both its ends to one and the same frame (3) of the structure of the fuselage (1) of the aircraft, at two symmetrical points relative to a vertical plane of symmetry of the aircraft, and **in that** each profile element (9) has a length calculated according to its arrangement between the frames (3) of the cabin of the aircraft.

9. Method for assembling a floor (2) on a shell structure (1) of a vehicle shell section which comprises the steps of:
- producing the shell structure (1) comprising the frames (3),
- cutting the profile elements (9) to predetermined lengths and finishing their ends,
- offering up a first profile element (9a) at a right angle to the frame (3a) to which it must be fixed,
- fixing the crossmember (10a) of this profile element (9a) to the corresponding frame (3a),
- adding, one by one, profile elements (9ᵢ) alongside the floor (2) already assembled, and fixing the crossmembers (10ᵢ) of these various juxtaposed profile elements (9ᵢ), to the corresponding frames (3ᵢ) at one and the same level on the vertical axis Z, each area of overlap (15ᵢ) of a plate being placed above a support area (16ᵢ₋₁) of the next plate,
- securely attaching two successive elements in the areas of overlap (15) and of support (16) of said elements,
- offering up a crossmember of conventional "I" profile, of dimensions similar to the crossmembers (10) of the profile elements (9), under the area of overlap (15) of the last assembled profile element, securely attaching thereto, and fixing to the frame (3) located at the same position on the longitudinal axis X of the aeroplane.
